# EUROPÄISCHE PATENTSCHRIFT

(11) **EP 2 080 415 B1**
(45) Veröffentlichungstag und Bekanntmachung des Hinweises auf die Patenterteilung: **19.12.2012**
(21) Anmeldenummer: 07802306.6
(22) Anmeldetag: 14.09.2007
(51) Int. Cl.: H05B 3/42, B29C 45/27

(54) **ELEKTRISCHE HEIZEINRICHTUNG FÜR HEISSKANALSYSTEME**
ELECTRIC HEATING DEVICE FOR HOT RUNNER SYSTEMS
DISPOSITIF DE CHAUFFAGE ÉLECTRIQUE POUR SYSTÈMES À CANAUX CHAUDS

(30) Priorität: 18.10.2006 DE 102006049667
(43) Veröffentlichungstag der Anmeldung: 22.07.2009
(73) Patentinhaber: Günther Heisskanaltechnik GmbH, 35066 Frankenberg/Eder (DE)
(72) Erfinder: GÜNTHER, Herbert, 35108 Allendorf (DE)
(74) Vertreter: Buchhold, Jürgen
(86) Internationale Anmeldenummer: PCT/EP2007/007998
(87) Internationale Veröffentlichungsnummer: WO 2008/046481

(56) Entgegenhaltungen:
- WO-A-01/54882
- WO-A-2004/036956
- DE-A1- 3 536 268
- DE-A1- 19 941 038
- DE-U1- 20 211 328
- US-A- 6 009 616

## Beschreibung

Die Erfindung betrifft eine elektrische Heizeinrichtung für Heißkanalsysteme, insbesondere für Heißkanaldüsen und/oder Heißkanalverteiler.

Heißkanalsysteme werden in Spritzgießwerkzeugen eingesetzt, um eine fließfähige Masse - beispielsweise eine Kunststoffschmelze - bei einer vorgebbaren Temperatur unter hohem Druck einem trennbaren Formeinsatz zuzuführen. Sie haben meist ein Materialrohr mit einem Strömungskanal, das in einem Düsenmundstück endet. Letzteres bildet endseitig eine Düsenaustrittsöffnung, die über eine Angussöffnung im Formeinsatz (Formnest) mündet. Damit sich die fließfähige Masse innerhalb des Materialrohrs nicht vorzeitig abkühlt, sind eine oder mehrere elektrische Heizeinrichtungen vorgesehen, die bis in das Düsenmundstück hinein für eine möglichst gleichmäßige Temperaturverteilung sorgen.

Die elektrische Heizeinrichtung kann beispielsweise als separates Bauelement mit einem wendelförmigen Heizelement ausgebildet sein, das in einer rohrförmigen Ummantelung integriert und umfangseitig auf das Materialrohr aufsetzbar ist. Die Ummantelung ist, wie beispielsweise in DE-U-295 07 848 oder US-PS-4,558,210 offenbart, ein starres Gebilde, das durch zusätzliche Halte- oder Spannelemente auf dem Materialrohr in axialer Richtung festgelegt wird. Alternativ kann man die Heizung als flexiblen Heizstreifen oder als flexible Heizmatte zwischen elektrisch isolierenden Schichten mit gegebenenfalls unterschiedlichen Wärmeleitungsvermögen ausbilden, die auf dem Außenumfang des Materialrohrs fixiert werden. EP-B1-0 028 153 sieht hierzu wärmeleitende Klebestreifen vor, während WO 97/03540 flexible Haltebänder mit Klett- oder Druckverschlüssen verwendet.

Ein Nachteil dieser bekannten Heizvorrichtungen besteht in den relativ großen Abmessungen, so dass den Heißkanaldüsen beim Einbau sehr viel Platz zur Verfügung gestellt werden muss, was bei den meisten Anwendungsfällen nicht wünschenswert ist, insbesondere dann, wenn kleine Nestabstände gefordert sind. Die relativ großen Dimensionen erfordern ferner eine höhere Heizleistung, was sich negativ auf den Energieverbrauch auswirkt. Hinzu kommt, dass die großen thermischen Massen die Aufheiz- und Abkühlphasen verlängern, wodurch sich Begrenzungen hinsichtlich erhöhter Produktivitätsraten ergeben.

Zur Behebung dieser Probleme schlägt DE-A-199 41 038 vor, auf zumindest einer einem Strömungskanal zugeordneten Wandung eines Materialrohrs wenigstens eine Isolierschicht und wenigstens eine Heizleiterbahnen aufweisende Heizschicht mittels Direktbeschichtung stoffschlüssig aufzubringen, also die Heizeinrichtung und das Materialrohr einteilig auszubilden. Die Direktbeschichtung kann dabei beispielsweise unter Verwendung der Folien-, Dickschicht- oder Siebdrucktechnik erfolgen, wobei die Schichten nach dem Auftragen jeweils separat oder simultan eingebrannt werden. Das stoffschlüssige Aufbringen der Heizeinrichtung in Schichten sorgt für eine dauerhaft feste Verbindung mit der Wandung des Strömungskanals und damit für einen festen Halt auf dem Heißkanalverteiler oder der Heißkanaldüse. Aufgrund der durch die Direktbeschichtung erzielten geringen Dickenabmessungen nimmt die Heizeinrichtung insgesamt nur wenig Raum ein, so dass sich im Vergleich zu den zuvor genannten Heizeinrichtungen bei nahezu gleichen Leistungsmerkmalen äußerst kompakte Bauformen realisieren lassen. Zudem kann die Leistungsdichte deutlich erhöht werden, da die Wärme direkt auf der Oberfläche des zu beheizenden Heißkanalelements erzeugt und abgenommen wird. Eine Überhitzung der meist empfindlichen Heizelemente wird dadurch vermieden. Ferner lässt sich die Düse rasch und präzise aufheizen und ebenso wieder abkühlen, was sich günstig auf den gesamten Produktionsablauf auswirkt.

Ein Nachteil dieser einteilig mit dem Materialrohr ausgebildeten Heizeinrichtungen besteht allerdings darin, dass sich die Heizeinrichtungen im Bedarfsfall nicht austauschen und auch nur schwer reparieren lassen. Ferner ist die Materialauswahl für die einzelnen Schichten dahingehend beschränkt, dass man nur solche Materialien verwenden kann, deren Einbrenntemperatur derart gering ist, dass die Gefügestruktur des Materialrohrs, das gewöhnlich aus Werkzeugstahl gefertigt und ebenfalls den Einbrenntemperaturen ausgesetzt ist, während des Einbrennvorgangs nicht verändert wird. Die Einbrenntemperaturen der einzelnen Schichten dürfen daher die Vergütungstemperatur des Materialrohrmaterials nicht übersteigen.

Aus DE 202 11 328 U1 ist ein Temperaturfühler für die Verwendung in Heißkanalsystemen bekannt, der sich dadurch auszeichnet, dass das Widerstandselement entlang seiner Längs- und/oder Querausdehnung wenigstens einen Teilabschnitt aufweist, der einen größeren elektrischen Widerstand aufweist als der übrige Bereich des Widerstandselements. Hierdurch wird die Temperatur an einem kleinen definierten Ort bestimmbar. Dieser Temperaturfühler kann mit oder ohne Heizvorrichtung ausgebildet sein. Er kann unter anderem aus eingebrannten Dickschichtpasten oder aus einer Dielektrikumsschicht bestehen.

Aus WO 01/54882 A ist eine Düse für ein Spritzgießwerkzeug mit einer Heiz- und/oder Kühlvorrichtung bekannt, bei welcher der Düsenkörper wenigstens eine im Wesentlichen ebene Seitenfläche aufweist, die in flächiger Verbindung und/oder Anordnung die Heiz- und/oder Kühlvorrichtung trägt oder aufnimmt.

Weiterhin ist aus der WO 2004/036956 A ein Verbundkörper mit einem Grundkörper aus Stahl und einer darauf aufgebrachten Heizungsbeschichtung bekannt, bei dem der Grundkörper aus einem ausscheidungsgehärteten Stahl gefertigt ist. Hierdurch soll die Heizungsbeschichtung auf Materialrohren widerstandsfähiger gegen die thermischen und mechanischen Belastungen gemacht werden.

Ziel der Erfindung ist es, diese und weitere Nachteile des Standes der Technik zu vermeiden und eine verbesserte Heizeinrichtung zu schaffen, die einfach und kostengünstig herstellbar ist. Angestrebt wird insbesondere ein entsprechendes Herstellungsverfahren, ein verbessertes Heißkanalsystem sowie eine verbesserte Heißkanaldüse.

Hauptmerkmale der Erfindung sind im kennzeichnenden Teil der Ansprüche 1, 12 und 13 angegeben. Ausgestaltungen sind Gegenstand der Ansprüche 2 bis 11.

Bei einer elektrischen Heizeinrichtung für Heißkanalsysteme, insbesondere für Heißkanaldüsen und/oder Heißkanalverteiler, die gemäß der vorliegenden Erfindung wenigstens ein rohrförmig oder hülsenartig ausgebildetes Trägerelement und wenigstens eine Heizleiterbahnen aufweisende Heizschicht hat, wobei die Heizschicht eine eingebrannte Folie oder eine eingebrannte Dickschichtpaste ist, sieht die Erfindung vor, dass zwischen dem Trägerelement und der Heizschicht eine Isolierschicht angeordnet ist, und dass das Trägerelement aus Metall, aus einer Metalllegierung, aus Stahl oder aus einer Stahllegierung gefertigt und auf ein Materialrohr einer Heißkanaldüse aufschiebbar ist.

Durch den rohr- oder hülsenartigen Aufbau des Trägerelements kann die gesamte Heizeinrichtung beispielsweise auf ein Materialrohr einer Heißkanaldüse aufgeschoben werden, wodurch sich ein insgesamt zweiteiliger Aufbau bestehend aus Heizeinrichtung und Materialrohr ergibt. Die Heizeinrichtung ist entsprechend austauschbar. Da die Heizschicht eine eingebrannte Folie oder eine eingebrannte Dickschichtpaste ist, weist die Heizeinrichtung sehr geringe Dickenabmessungen auf, weshalb sie nur wenig Raum einnimmt, so dass sich im Vergleich zu anderen mechanisch lösbaren Heizeinrichtungen bei nahezu gleichen Leistungsmerkmalen äußerst kompakte Heißkanaldüsen realisieren lassen. Darüber hinaus lässt sich die Heizeinrichtung einfach und kostengünstig fertigen, was sich günstig auf die Herstellkosten auswirkt.

Oberhalb der Heizschicht ist bevorzugt wenigstens eine elektrisch isolierende Abdeckschicht vorgesehen, welche die Heizschicht und das Trägerelement nach außen hin abdeckt und elektrisch isoliert. Die Abdeckschicht ist vorteilhaft als äußerste Schicht der Heizeinrichtung vorgesehen.

Zur Erfassung der Ist-Temperatur im Strömungskanal ist vorteilhaft wenigstens eine weitere als Temperaturfühler dienende Schicht vorgesehen, deren elektrischer Widerstand temperaturabhängig ist. Anhand des sich ändernden elektrischen Widerstandes kann kontinuierlich die Ist-Temperatur bestimmt werden, wobei die Messwerte zur Regelung der erfindungsgemäßen Heizeinrichtung verwendbar sind. Die als Temperaturfühler dienende Schicht weist bevorzugt ein PTC- oder NTC-Material auf. Alternativ ist ein Thermoelement als Temperaturfühler mit der gleichen Strukturierung wie ein Widerstandsfühler und dem Messpunkt nahe der Düsenspitze möglich.

Die als Temperaturfühler dienende Schicht bzw. das als Temperaturfühler dienende Thermoelement und die Heizschicht sind in radialer Richtung vorteilhaft in einer gemeinsamen Ebene angeordnet, wodurch der Bauraum der erfindungsgemäßen Heizeinrichtung zusätzlich reduziert werden kann. Für einen besseren Wärmekontakt kann man zwischen diesen beiden Schichten vorteilhaft wenigstens eine elektrisch isolierende Kontaktschicht vorsehen.

Das Trägerelement ist vorteilhaft aus einem Sintermaterial, wie beispielsweise einem Sintermetall gefertigt. Man kann aber auch ein Metall eine Metalllegierung, einen Stahl oder eine Stahllegierung verwenden. Verwendet man ein elektrisch leitfähiges Material wie Metall, z.B. einen Werkzeugstahl, ein Hartmetall o.dgl., oder auch einen Stahl, so wird zwischen dem Trägerelement und der Heizschicht eine Isolierschicht angeordnet, um die Heizschicht gegenüber dem Trägerelement elektrisch zu isolieren.

Sowohl die Abdeckschicht als auch die als Zwischenschicht dienende Isolierschicht sind bevorzugt eine glasartige und/oder keramische Dielektrikumschicht, die nach zumindest einem Einbrennprozess gegenüber dem Trägerelement unter Druckvorspannung steht, so dass bei der Innendruckbelastung des Trägerelementes radienabhängig in unterschiedlicher Höhe auftretende Delaminationskräfte innerhalb der Isolierschicht kompensiert werden. Die Druckvorspannung wird bevorzugt erzeugt, indem in Abhängigkeit von den dehnungsrelevanten Kenngrößen des Trägerelementes fallweise eine jeweils spezifische Fehlanpassung des linearen Ausdehnungskoeffizienten der keramischen Isolierschicht TEC_{DE} bzw. des linearen thermischen Ausdehnungskoeffizienten TEC_{DEA} der Abdeckschicht an den entsprechenden Wert des Trägerelementes TEC_{M} vorgegeben wird, wobei der Betrag der Differenzausdehnung TEC_{DE}-TEC_{M} bzw. TEC_{DEA}-TEC_{M} einen Wert von 5 ·10⁻⁶K⁻¹ nicht überschreitet.

Darüber hinaus weist die Isolierschicht und/oder die Abdeckschicht bevorzugt die Eigenschaft auf, bei der jeweiligen Einbrenntemperatur die Trägeroberfläche zu benetzen. Unter bestimmten Umständen ist es dabei vorteilhaft, dass das Materialsystem zumindest teilweise in den kristallinen Zustand übergeht.

Die Isolierschicht und/oder die Abdeckschicht kann ein glasiges oder glasig-kristallines Materialsystem aufweisen, das wenigstens ein vorgebildetes Glas enthält, welches bei einer vorgebbaren Einbrenntemperatur die Oberfläche des Trägerelements benetzt. Das Materialsystem kann ferner wenigstens ein vorgebildetes Glas enthalten, welches bei einer vorgebbaren Einbrenntemperatur zumindest teilweise in einen kristallinen Zustand übergeht.

Zusätzlich bzw. alternativ kann das Materialsystem mindestens ein weiteres, unter Einbrennbedingungen nicht kristallisierendes Glas und/oder mindestens eine a priori kristalline Verbindung enthalten, wobei durch Optimierung der Mengenanteile der vorgebildeten glasigen und kristallinen Bestandteile des Materialsystems unter Berücksichtigung ihrer jeweiligen TEC-Inkremente unter den Bedingungen des jeweiligen Einbrennvorgangs eine keramische Dielektrikumschicht mit einem TEC-Wert im Bereich zwischen 0 und 13 ·10⁻⁶K⁻¹ erhalten wird.

Zwischen dem Trägerelement und der Isolierschicht kann zusätzlich eine Ausgleichsschicht angeordnet sein, die beispielsweise aus chemischem Nickel besteht. Eine solche Ausgleichsschicht dient ebenfalls dem Ausgleich unterschiedlicher Wärmeausdehnungskoeffizienten zwischen Trägermaterial und Isolierschicht. Die Ausgleichsschicht kann in gleicher Weise wie die Isolierschicht und die Abdeckschicht aufgebracht werden.

Die Isolierschicht und/oder die Abdeckschicht und/oder die Ausgleichsschicht ist bevorzugt eine eingebrannte Folie oder eine eingebrannte Dickschichtpaste. Die Schichten können jedoch auch durch Detonationsbeschichten oder durch thermisches Beschichten aufgebracht sein. Alternativ ist auch ein Tauchbeschichten (Dippvorgang) mit anschließendem Einbrennen möglich.

Die Ausbildung und/oder die Anordnung der Heizleiterbahnen innerhalb der Heizschicht ist an den jeweiligen Heizleistungsbedarf angepasst. Dadurch können die später an einem besonders stark zu erwärmenden Materialrohrabschnitt anzuordnenden Heizleiterbahnabschnitte beispielsweise mit einem dünneren oder dickeren Querschnitt ausgebildet sein, um in diesem Abschnitt entsprechend mehr oder weniger Wärmeenergie freizusetzen.

Wird die Heizleiterbahn wendel- oder mäanderförmig ausgebildet, so kann die Wendelsteigung abschnittweise geringer oder größer gewählt werden, um die Wärmeenergieabgabe zu variieren. Ferner kann man abschnittsweise unterschiedliche Bahnabstände wählen.

Um zu vermeiden, dass in den Wendepunkten der Heizleiterbahnen punktuell Stellen mit erhöhter Temperatur entstehen (so genannte "Hot Spots"), sieht eine Weiterbildung der Erfindung vor, dass die mäanderförmigen Heizleiterbahnen an und/oder in ihren Wendepunkten zumindest abschnittsweise mit einer zusätzlichen leitfähigen Schicht versehen sind. Diese Schichtbrücken verbinden bzw. verbreitern benachbarte Heizleiterbahnabschnitte, so dass der Widerstand der Heizleiterbahn in den Wendepunkten gezielt etwas geringer ist als in den übrigen Bereichen. Mit der Heizeinrichtung wird mithin eine äußerst gleichmäßige Temperaturverteilung erzielt.

Die leitfähigen Schichtbrücken werden vorzugsweise als Folien oder Dickschichtpasten auf die Heizleiterschicht aufgebracht. Die Schichten können jedoch auch durch Detonationsbeschichten oder durch thermisches Beschichten aufgebracht sein.

Zwischen der Isolierschicht, der Heizleiterschicht und/oder dem Temperaturfühler kann jeweils eine Kontaktschicht angeordnet sein. Auch bei dieser und/oder bei der als Temperaturfühler dienenden Widerstandschicht und/oder bei der zwischen Trägerelement und Heizleiterbahn angeordneten isolierenden bzw. haftvermittelnden Zwischenschicht (Isolierschicht) handelt es sich bevorzugt wahlweise um eingebrannte Folien oder eingebrannte Dickschichtpasten. Diese lassen sich einfach und kostengünstig aufbringen, insbesondere strukturieren und handhaben, so dass sich äußerst zuverlässige und günstige Heizvorrichtung herstellen lassen.

Insgesamt bilden die Isolierschicht, die Heizschicht, die Abdeckschicht, die Kontaktschicht und die als Temperaturfühler dienende Schicht bevorzugt einen Schichtverbund, so dass stets ein kompakter Aufbau der erfindungsgemäßen Heizeinrichtung erzielt wird.

Die vorliegende Erfindung bezieht sich ferner auf ein Heißkanalsystem, insbesondere eine Heißkanaldüse oder einen Heißkanalverteiler mit einer elektrischen Heizeinrichtung der zuvor beschriebenen Art. Die elektrische Heizeinrichtung ist dabei mit dem rohrförmig oder hülsenartig ausgebildeten Trägerelement auf ein Materialrohr, einen Stab, einen Verteilerarm, eine Düse o.dgl. aufgesetzt bzw. aufgeschoben.

Zudem bezieht sich die vorliegende Erfindung auf eine Heißkanaldüse mit einer erfindungsgemäßen elektrischen Heizeinrichtung, wobei die elektrische Heizeinrichtung bzw. das rohrförmig oder hülsenartig ausgebildete Trägerelement auf ein Materialrohr unter Bildung einer Passung mit vorbestimmtem Spiel aufgesetzt ist.

Schließlich betrifft die vorliegende Erfindung ein Verfahren zur Herstellung einer erfindungsgemäßen elektrischen Heizeinrichtung für Heißkanalsysteme, insbesondere für Heißkanaldüsen und/oder Heißkanalverteiler, wobei die Heizschicht und/oder die Isolierschicht und/oder die Abdeckschicht und/oder die Kontaktschicht und/oder die als Temperaturfühler dienende Schicht in Folien- oder Siebdrucktechnik aufgebracht werden.

Diese Auftragstechnik ist gut beherrschbar und kostengünstig realisierbar. Die erzeugten Schichten lassen sich präzise aufbringen, was sich insgesamt günstig auf die Temperaturverteilung und auch auf die Standzeit der Heizelemente auswirkt.

Die in Siebdrucktechnik aufgebrachten Schichten werden vorteilhaft unter Verwendung der Runddrucktechnologie in Form von Pasten aufgebracht, was eine insgesamt ökonomische Verfahrensführung gewährleistet.

Jede Schicht kann separat aufgetragen und bei unterschiedlichen Temperaturen eingebrannt werden. Zum Beispiel kann auf dem Trägerelement aus Keramik ein Widerstandsmaterial (beispielsweise Platin) verwendet werden, das bei höheren Temperaturen eingebrannt wird als die im folgenden Schritt eingebrannte Abdeckschicht. Alternativ kann auch das Widerstandsmaterial zusammen mit dem Material, das für den Temperaturfühler verwendet wird, gleichzeitig und bei höheren Temperaturen eingebrannt werden als die im folgenden Schritt eingebrannte Abdeckschicht. Alternativ können auch alle Schichten nach dem Auftragen simultan eingebrannt werden, was auch als "co-firing" bezeichnet wird. Der Einbrenn-Temperaturbereich liegt bevorzugt zwischen 800 und 1400°C.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer erfindungsgemäßen Heißkanaldüse mit einer ersten Ausführungsform einer erfindungsgemäßen Heizeinrichtung;
- Fig. 2: die in Fig. 1 dargestellte Heizeinrichtung in einer abgewickelten und teilweise aufgefächerten Darstellung;
- Fig. 3: die Heizeinrichtung von Fig. 1 und 2 mit einem Thermofühler in abgewickelter Darstellung;
- Fig. 4: eine andere Art der Heizungs- und Thermofühler-Anordnung;
- Fig. 5: eine noch andere Ausführungsform einer Heizung mit Thermofühler und
- Fig. 6: eine alternative Ausführungsform einer erfindungsgemäßen Heizeinrichtung in einer abgewickelten und teilweise aufgefalteten Darstellung.

Gleiche Bezugsziffern beziehen sich nachfolgend auf gleichartige Bauteile.

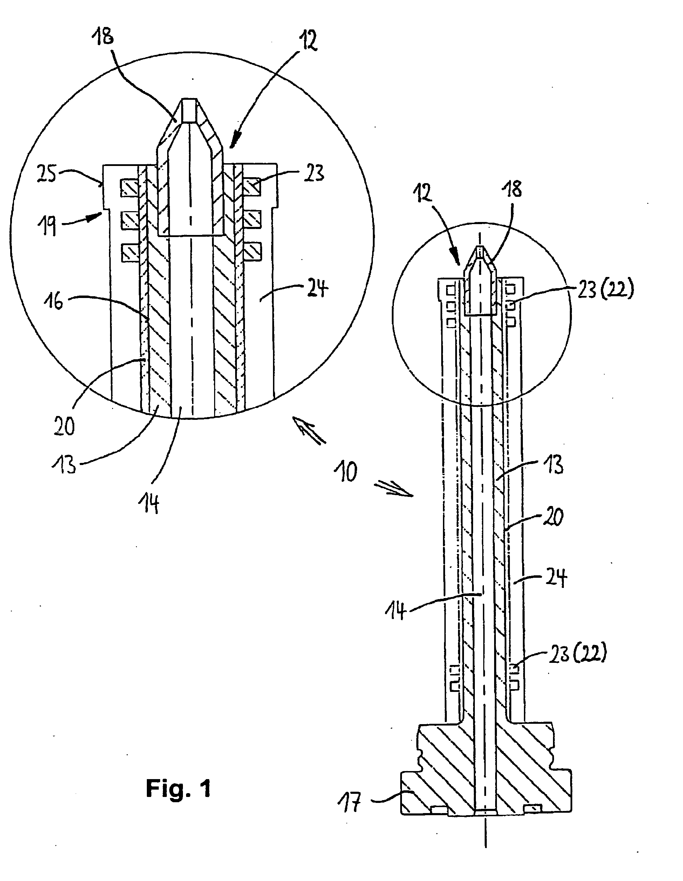

Die in Fig. 1 skizzierte Heißkanaldüse 12 hat als Bestandteil einer Spritzgussanlage für thermoplastische Kunststoffverarbeitung zur Festlegung an einem (nicht dargestellten Verteiler ein (ebenfalls nicht gezeigtes) Gehäuse, in das ein insgesamt zylindrisches Materialrohr 13 einsetzbar ist. Ein an diesem endseitig ausgebildeter Sockel 17 schließt bündig mit dem Gehäuse ab und liegt dichtend an dem Verteiler an. In das sich in Axialrichtung längs erstreckende Materialrohr 13 ist endseitig eine Düsenspitze 18 eingesetzt, vorzugsweise eingeschraubt, die den in dem Materialrohr 13 ausgebildeten Strömungskanal 14 bis an die (nicht dargestellte) Ebene eines (ebenfalls nicht sichtbaren) Formnests fortsetzt. Die Düsenspitze 18 kann auch bei gleicher Funktionsweise mit dem Materialrohr 13 einstückig ausgebildet sein.

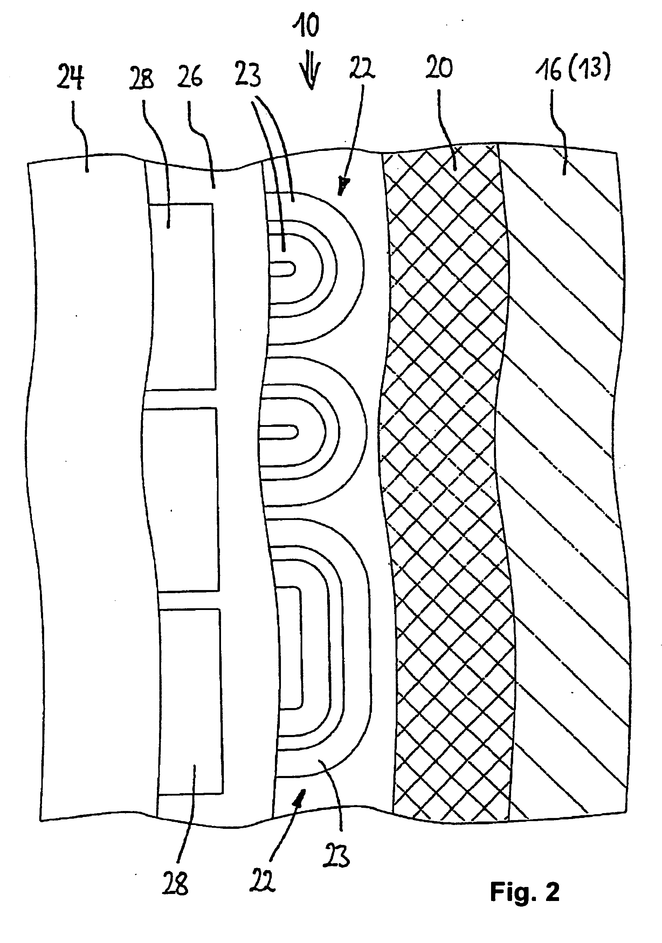

Auf dem Umfang der Wandung 16 des aus Stahl gefertigten Materialrohrs 13 ist eine Heizeinrichtung 10 aufgeschoben. Diese umfasst ein hülsenartiges, keramisches Trägerelement 20 (nicht beansprucht), das gleichzeitig als elektrische Isolierung dient, eine darüber aufgebrachte Heizschicht 22, die - wie in Fig. 2 schematisch angedeutet - mäanderförmige Heizleiterbahnen 23 aufweist, sowie eine äußere Abdeckschicht 24, welche die Heizleiterbahnen 23 und das darunter liegende Trägerelement 20 nach außen hin abdeckt und elektrisch isoliert. Die beliebig gestaltbaren Heizleiterbahnen 23 können je nach erforderlicher Leistung in unterschiedlicher Dichte und Anordnung auf das Trägerelement 20 aufgebracht sein. Hierdurch lässt sich bei Bedarf eine definierte Temperaturverteilung innerhalb des Materialrohrs 13 erzielen.

Um sowohl den Anstieg als auch den Verlauf der Temperatur innerhalb des Materialrohrs 13 bzw. innerhalb der Wandung 16 verfolgen bzw. kontrollieren und regeln zu können, ist zwischen der Heizschicht 22 und der Abdeckschicht 24 zumindest abschnittweise wenigstens eine als Temperaturfühler dienende Schicht 28 aus einem PTC-Material vorgesehen, deren Widerstand mit steigender Temperatur zunimmt (Fig. 2). Anstelle eines mit der Temperatur variablen Widerstandsmaterials kann man auch ein Thermoelement aus einem geeigneten Material verwenden. Für einen besseren Wärmekontakt befindet sich zwischen der Heizschicht 22 und der als Temperaturfühler dienenden Schicht 28 eine elektrisch isolierende Kontaktschicht 26, die bei Bedarf auch zwischen weiteren Schichten vorgesehen sein kann.

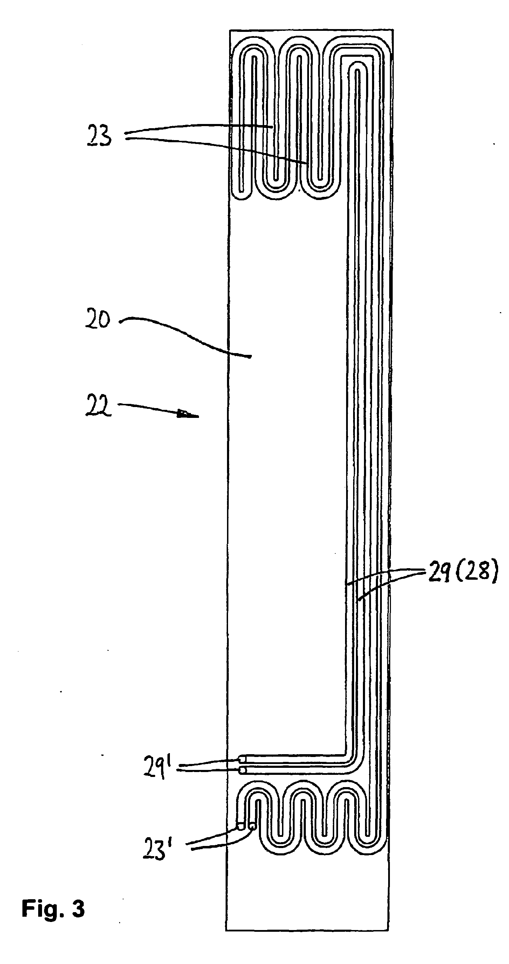

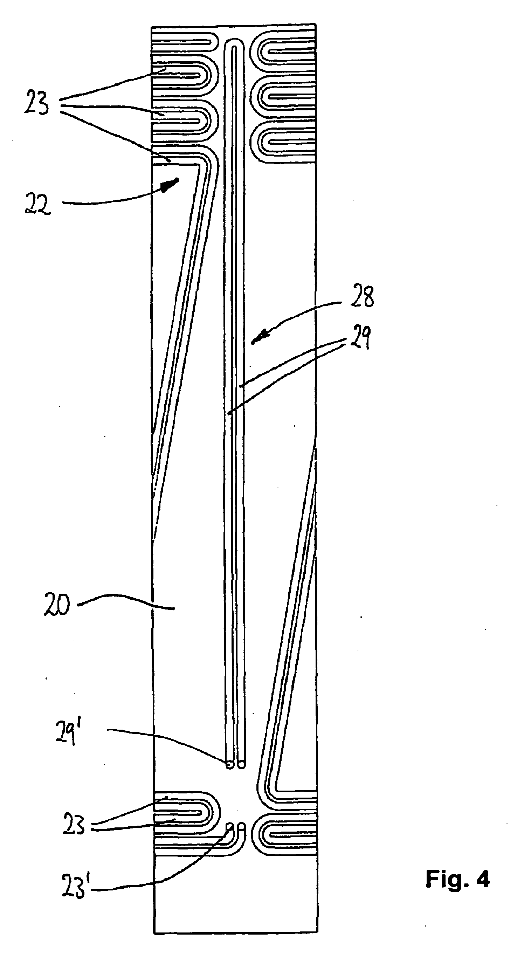

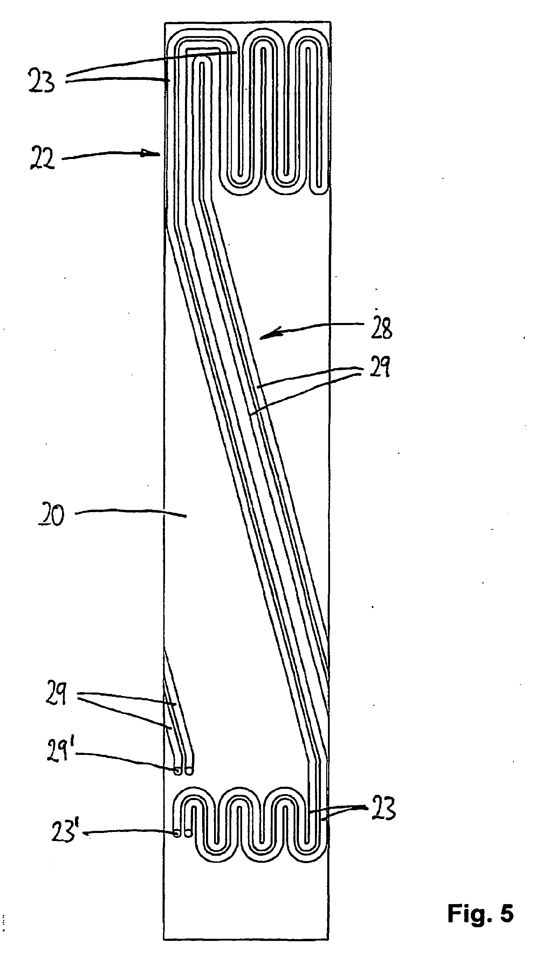

Die als Temperaturfühler dienende Schicht 28 kann ebenso wie die Heizschicht 22 Leiterbahnen 29 aufweisen, die als Thermofühler den Temperaturverlauf messen (siehe Fig. 4). Die Leiterbahnen 29 liegen dabei zweckmäßig in der gleichen Ebene wie die Heizleiterbahnen 23 der Heizschicht 22 und werden gemeinsam mit diesen von der Abdeckschicht 24 nach außen hin geschützt. Auf diese Weise ist die Höhe der Heizeinrichtung 10 auf ein Minimum reduziert. Die Fig. 3, 4 und 5 zeigen alternative Möglichkeiten für eine Gestaltung der Heizleiterbahnen 23 sowie der Leiterbahnen 29 für die Temperaturmessung.

Jede Schicht 22, 24, 26, 28 wird mittels Direktbeschichtung stoffschlüssig auf das Trägerelement 20 aufgetragen und anschließend unter den jeweils materialspezifisch vorgegebenen Einbrennbedingungen eingebrannt, so dass ein stoffschlüssiger Schichtverbund entsteht, der die Heizeinrichtung 10 bildet. Da die einzelnen Funktionsschichten 20, 22, 24, 26, 28 des Schichtverbunds aufgrund ihres materialspezifisch sehr ähnlichen Aufbaus zudem untereinander eine außerordentlich gute Haftfähigkeit aufweisen, hält die Heizeinrichtung 10 insgesamt selbst extremen mechanischen und/oder thermischen Belastungen dauerhaft stand. Nach Erzeugen des Schichtverbunds wird die Heizeinrichtung 10 auf das Materialrohr 13 mit einem vorbestimmten Spiel aufgeschoben, das derart gewählt ist, dass die Heizeinrichtung 10 im aufgeheizten Betriebszustand nicht durch das sich unter der Wärmeeinwirkung mehr ausdehnende Materialrohr 13 beschädigt wird, jedoch ein möglichst guter Wärmeübergang zwischen dem Trägerelement 20 und dem Materialrohr 13 sichergestellt ist.

Ein besserer Wärmeübergang kann durch ein zusätzliches Anrauen der Innenseite des Trägerelementes bzw. der Außenseite des Materialrohrs bewirkt werden. Zur besseren Wärmeübertragung kann auch die Innenseite des Trägerelementes bzw. die Außenseite des Materialrohrs mit einer dunklen oder schwarzen Schicht versehen werden. Diese Schicht kann beispielsweise aus einer schwarzen Farbe bestehen, wie sie beim Bau von Strahlungsheizelementen verwendet wird. Alternativ oder zusätzlich kann auch ein dunkles Material, insbesondere eine dunkle Keramik für das Trägerrohr verwendet werden, wie z.B. schwarzes Aluminiumoxid. Wird ein metallisches Trägerrohr verwendet, kann durch den Einbrennvorgang ein dunkles Anlaufen des Metalls an der Innenseite des Rohrs bewirkt werden.

Als Beschichtungsverfahren zum Auftragen der einzelnen Funktionsschichten eignet sich die Folien- und die Dickschicht-Siebdrucktechnik, für das Auftragen der Isolierschicht und/oder der Abdeckschicht ggf. auch die Detonationsbeschichtung oder thermische Beschichtungsmethoden. Bevorzugt verwendet man allerdings die Dickschicht-Siebdrucktechnik unter Anwendung der Runddrucktechnologie. Das Einbrennen der Schichten kann einzeln oder gemeinsam erfolgen.

Die elektrischen Anschlüsse 23' und 29' für die Heizleiterbahnen 23 und für die als Temperaturfühler dienende Schicht 28 werden ebenfalls in Dickschichttechnik ausgeführt, wobei die hierfür erforderlichen Kontakte derart gestaltet sind, dass die Leistungszufuhr bzw. Informationsübertragung über steckbare Kabelverbindungen erfolgen kann.

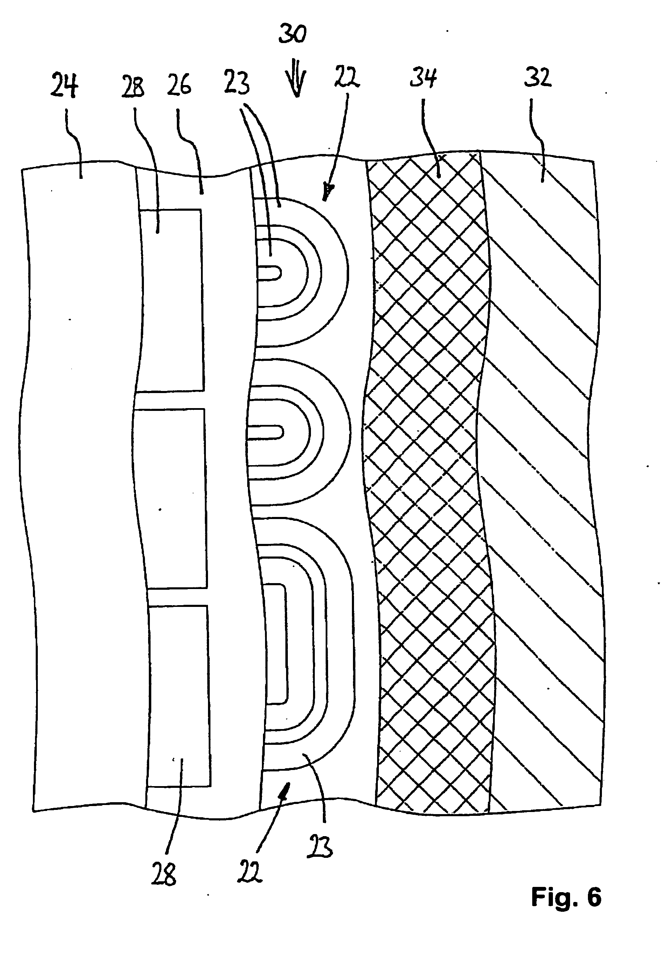

Fig. 6 zeigt eine alternative Ausführungsform einer erfindungsgemäßen Heizeinrichtung 30 in einer abgewickelten und teilweise aufgefächerten Darstellung. Die Heizeinrichtung 30 umfasst ein rohr- oder hülsenartiges Trägerelement 32, das im Wesentlichen dem Trägerelement 20 der in den Fig. 1 und 2 dargestellten Heizeinrichtung 10 entspricht, jedoch nicht aus Keramik sondern das aus einem Metall oder einer Metalllegierung hergestellt ist. Zur elektrischen Isolierung ist auf dem Trägerelement 20 eine Isolierschicht bzw. Dielektrikumschicht 34 angeordnet, auf der dann der Reihe nach die Heizschicht 22, die Kontaktschicht 26, die einen Temperaturfühler bildende Schicht 28 und die Abdeckschicht 24 vorgesehen sind, ebenso wie bei der in Fig. 2 dargestellten Heizeinrichtung 10. Das Auftragen der einzelnen Funktionsschicht erfolgt in gleicher Weise wie bei der Heizeinrichtung 10.

Auf die zwecks verbesserter Haftfestigkeit in bekannter Weise aufgeraute Oberfläche des Trägerelements 32 wird zur Erzeugung der Dielektrikumschicht 34 im Runddruckverfahren eine Dickschicht-Dielektrikumpaste aufgebracht. Deren Feststoffanteil kann z.B. aus einem im Temperaturbereich oberhalb 900 °C in situ kristallisierenden Glas mit den Hauptkomponenten BaO, Al₂O₃ und SiO₂ in der näherungsweise molaren Zusammensetzung BaO Al₂O₃ 4 SiO₂ bestehen. Die nach dem Einbrennen erhaltene Dielektrikumschicht 32 besitzt einen TEC von 6 ·10⁻⁶K⁻¹ im Temperaturbereich 20 bis 300 °C.

Bedingt durch den hierdurch entstehenden TEC-Mismatch zwischen Metallwandung 16 und Dielektrikumschicht 34 in der Größenordnung 5 ·10⁻⁶K⁻¹ ist beim Abkühlen der mit dem Dielektrikum beschichteten Wandung 16 des Trägerelementes 32 im Temperaturbereich der reinelastischen Deformation, d.h. zwischen der Transformationstemperatur des Glases von etwa 700 °C und Raumtemperatur, mit dem Aufbau einer Druckspannung von etwa 3500 bar zu rechnen (bei einem angenommenen E-Modul der Dielektrikumschicht 34 von 2 ·10⁶ bar). Die Höhe der Druckvorspannung erreicht noch nicht den kritischen Grenzbereich der Eigendruckfestigkeit des Dielektrikums, der oberhalb von 6000 bar beginnt. Sie ist jedoch ausreichend, um das Auftreten von Zugspannungen in der Dielektrikumschicht 34 und damit auch in den nachfolgenden Schichten 22, 24 zuverlässig zu verhindern, wenn die Wandung 16 des Trägerelementes 32 bei einer Belastung von 2000 bar zyklisch gedehnt wird.

Die Erfindung ist nicht auf eine der zuvor beschriebenen Ausführungsformen beschränkt. Vielmehr sind Modifikationen und Änderungen möglich, ohne den Schutzbereich der vorliegenden Erfindung zu verlassen, der durch die beiliegenden Ansprüche definiert ist. So kann beispielsweise die Isolierschicht und/oder die Abdeckschicht ein glasiges oder glasig-kristallines Materialsystem aufweisen, das wenigstens ein vorgebildetes Glas enthält, welches bei einer vorgebbaren Einbrenntemperatur die Oberfläche des Trägerelements benetzt. Das Materialsystem kann ferner wenigstens ein vorgebildetes Glas enthalten, welches bei einer vorgebbaren Einbrenntemperatur zumindest teilweise in einen kristallinen Zustand übergeht.

Zusätzlich bzw. alternativ kann das Materialsystem mindestens ein weiteres, unter Einbrennbedingungen nicht kristallisierendes Glas und/oder mindestens eine a priori kristalline Verbindung enthalten, wobei durch Optimierung der Mengenanteile der vorgebildeten glasigen und kristallinen Bestandteile des Materialsystems unter Berücksichtigung ihrer jeweiligen TEC-Inkremente unter den Bedingungen des jeweiligen Einbrennvorgangs eine keramische Dielektrikumschicht mit einem TEC-Wert im Bereich zwischen 0 und 9 ·10⁻⁶K⁻¹ erhalten wird.

Die Isolierschicht und/oder die Abdeckschicht ist - ebenso wie die Ausgleichsschicht - bevorzugt eine eingebrannte Folie oder eine eingebrannte Dickschichtpaste. Alle drei können auch durch Detonationsbeschichten oder thermisches Beschichten aufgebracht sein. Alternativ ist auch ein Tauchbeschichten mit anschließendem Einbrennen möglich.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Heizung
- 12: Heißkanaldüse
- 13: Materialrohr
- 14: Strömungskanal
- 16: Wandung
- 17: Sockelbereich
- 18: Düsenspitze
- 20: Trägerelement
- 22: Heizschicht
- 23: Heizleiterbahnen
- 23': Anschluss
- 24: Abdeckschicht
- 26: Kontaktschicht
- 28: als Temperaturfühler dienende Schicht
- 29: Leiterbahnen
- 29': Anschluss
- 30: Heizeinrichtung
- 32: Trägerelement
- 34: Dielektrikumschicht

## Patentansprüche

1. Elektrische Heizeinrichtung (10; 30) für Heißkanalsysteme, insbesondere für Heißkanaldüsen (12) und/oder Heißkanalverteiler, mit wenigstens einem rohrförmig oder hülsenartig ausgebildeten Trägerelement (20; 32) und mit wenigstens einer Heizleiterbahnen (23) aufweisenden Heizschicht (22), wobei die Heizschicht (22) eine eingebrannte Folie oder eine eingebrannte Dickschichtpaste ist, **dadurch gekennzeichnet, dass** zwischen dem Trägerelement (20; 32) und der Heizschicht (22) eine Isolierschicht (34) angeordnet ist, und dass das Trägerelement (20, 32) aus Metall, aus einer Metalllegierung, aus Stahl oder aus einer Stahllegierung gefertigt und auf ein Materialrohr (13) einer Heißkanaldüse aufschiebbar ist.

2. Heizeinrichtung nach Anspruch 1, **dadurch gekennzeichnet, dass** auf der Heizschicht (22) wenigstens eine elektrisch isolierende Abdeckschicht (24) aufgebracht ist.

3. Heizeinrichtung nach Anspruch 1 oder 2, **dadurch gekennzeichnet, dass** wenigstens eine weitere, als Temperaturfühler dienende elektrisch leitfähige Schicht (28) vorgesehen ist, deren elektrischer Widerstand temperaturabhängig ist, wobei die als Temperaturfühler dienende Schicht (28) und die Heizschicht (22) in radialer Richtung in einer Ebene liegen.

4. Heizeinrichtung nach einem der Ansprüche 1 bis 3, **dadurch gekennzeichnet, dass** das Trägerelement (20; 32) aus einem Sintermaterial gefertigt ist, wobei das Sintermaterial ein gesintertes Metall oder eine gesinterte Metalllegierung ist.

5. Heizeinrichtung nach Anspruch 1, **dadurch gekennzeichnet, dass** zwischen dem Trägerelement (20; 32) und der Isolierschicht (34) eine Ausgleichsschicht angeordnet ist.

6. Heizeinrichtung nach einem der Ansprüche 1 bis 5, **dadurch gekennzeichnet, dass** die Isolierschicht (34) und/oder die Abdeckschicht (24) und/oder die Ausgleichsschicht eine glasartige und/oder keramische Dielektrikumschicht ist, wobei die Isolierschicht (34) und/oder die Abdeckschicht (24) und/oder die Ausgleichsschicht nach zumindest einem Einbrennprozess gegenüber dem Trägerelement (20; 32) unter Druckvorspannung steht, wobei der lineare thermische Ausdehnungskoeffizient (TEC_{DE}) der Isolierschicht (34) und/oder der lineare thermische Ausdehnungskoeffizient (TEC_{DEA}) der Abdeckschicht (24) und/oder der lineare thermische Ausdehnungskoeffizient (TEC_{DEA}) der Ausgleichsschicht nach dem Einbrennprozess kleiner ist als der lineare thermische Ausdehnungskoeffizient (TEC_{M}) des Trägerelements (20; 32).

7. Heizeinrichtung nach einem der vorhergehenden Ansprüche, **dadurch gekennzeichnet, dass** die Isolierschicht (34) und/oder die Abdeckschicht (24) und/oder die Ausgleichsschicht eine eingebrannte Folie oder eine eingebrannte Dickschichtpaste ist, und/oder dass die Isolierschicht (34) und/oder die Abdeckschicht (24) und/oder die Ausgleichsschicht durch Detonationsbeschichten oder durch thermisches Beschichten oder durch Tauchbeschichten aufgebracht sind.

8. Heizeinrichtung nach einem der vorhergehenden Ansprüche, **dadurch gekennzeichnet, dass** die Ausbildung und/oder die Anordnung der Heizleiterbahnen (23) innerhalb der Heizschicht (22) an den jeweiligen Heizleistungsbedarf angepasst sind, wobei die Heizleiterbahnen (23) zumindest abschnittsweise mäanderförmig ausgebildet sind.

9. Heizeinrichtung nach Anspruch 8, **dadurch gekennzeichnet, dass** die mäanderförmigen Heizleiterbahnen (23) an und/oder in ihren Wendepunkten zumindest abschnittsweise mit einer zusätzlichen leitfähigen Schicht versehen sind.

10. Heizeinrichtung nach einem der vorhergehenden Ansprüche, **dadurch gekennzeichnet, dass** zwischen der Isolierschicht (34), der Heizschicht (22) und/oder der als Temperaturfühler dienenden Schicht (28) jeweils eine Kontaktschicht (26) angeordnet ist.

11. Heizeinrichtung nach einem der vorhergehenden Ansprüche, **dadurch gekennzeichnet, dass** die Isolierschicht (34) und/oder die Heizschicht (22) und/oder die Abdeckschicht (24) und/oder die Ausgleichsschicht und/oder die Kontaktschicht (26) und/oder die als Temperaturfühler dienende Schicht (28) einen Schichtverbund bilden.

12. Heißkanalsystem, insbesondere Heißkanaldüse oder Heißkanalverteiler mit einer elektrischen Heizeinrichtung (10; 30) nach einem der Ansprüche 1 bis 11, wobei die elektrische Heizeinrichtung (10; 30) auf ein Materialrohr (13), einen Stab, einen Verteilerarm, eine Düse o.dgl. aufgesetzt ist.

13. Heißkanaldüse mit einer elektrischen Heizeinrichtung (10; 30) nach einem der Ansprüche 1 bis 11, **dadurch gekennzeichnet, dass** die elektrische Heizeinrichtung (10; 30) auf ein zylindrisches Materialrohr (13) unter Bildung einer Passung mit vorbestimmtem Spiel aufgesetzt ist.

## Claims

1. Electric heating installation (10; 30) for hot runner systems, in particular for hot runner nozzles (12) and/or hot runner distributors, comprising at least one tubular or sleeve-like support member (20; 32) and at least one heating layer (22) comprising heating conductor tracks (23), the heating layer (22) being a fired film or a fired thick-film paste, **characterised in that** an insulating layer (34) is arranged between the support member (20; 32) and the heating layer (22), and **in that** the support member (20, 32) is made of metal, of a metal alloy, of steel or of a steel alloy and can be slid onto a material tube (13) of a hot runner nozzle.

2. Heating installation according to claim 1, **characterised in that** at least one electrically insulating cover layer (24) is deposited on the heating layer (22).

3. Heating installation according to either claim 1 or claim 2, **characterised in that** at least one further electrically conducting layer (28) which serves as a temperature sensor is provided, the electrical resistance of which layer is temperature dependent, the layer (28) which serves as a temperature sensor and the heating layer (22) being located in one plane in the radial direction.

4. Heating installation according to any of claims 1 to 3, **characterised in that** the support member (20; 32) is made of a sintered material, the sintered material being a sintered metal or a sintered metal alloy.

5. Heating installation according to claim 1, **characterised in that** a compensating layer is arranged between the support member (20; 32) and the insulating layer (34).

6. Heating installation according to any of claims 1 to 5, **characterised in that** the insulating layer (34) and/or the cover layer (24) and/or the compensating layer is a vitreous and/or ceramic dielectric layer, the insulating layer (34) and/or the cover layer (24) and/or the compensating layer being compressively prestressed relative to the support member (20; 32) after at least one firing procedure, the linear thermal expansion coefficient (TEC_{DE}) of the insulating layer (34) and/or the linear thermal expansion coefficient (TEC_{DEA}) of the cover layer (24) and/or the linear thermal expansion coefficient (TEC_{DEA}) of the compensating layer being smaller after the firing procedure than the linear thermal expansion coefficient (TEC_{M}) of the support member (20; 32).

7. Heating installation according to any of the preceding claims, **characterised in that** the insulating layer (34) and/or the cover layer (24) and/or the compensating layer is a fired film and/or a fired thick-film paste, and/or **in that** the insulating layer (34) and/or the cover layer (24) and/or the compensating layer is deposited by detonation coating or by thermal coating or by dip coating.

8. Heating installation according to any of the preceding claims, **characterised in that** the configuration and/or the arrangement of the heating conductor tracks (23) within the heating layer (22) are adapted to individual heating requirements, the heating conductor tracks (23) being meander-shaped, at least in portions.

9. Heating installation according to claim 8, **characterised in that** the meander-shaped heating conductor tracks (23) are provided with an additional conducting layer at and/or in their turning points, at least in portions.

10. Heating installation according to any of the preceding claims, **characterised in that** a contact layer (26) is arranged between the insulating layer (34), the heating layer (22) and/or the layer (28) which serves as a temperature sensor.

11. Heating installation according to any of the preceding claims, **characterised in that** the insulating layer (34) and/or the heating layer (22) and/or the cover layer (24) and/or the compensating layer and/or the contact layer (26) and/or the layer (28) which serves as a temperature sensor form a laminar structure.

12. Hot runner system, in particular a hot runner nozzle or hot runner distributor comprising an electric heating installation (10; 30) according to any of claims 1 to 11, wherein the electric heating installation (10; 30) is attached to a material tube (13), a bar, a distributor arm, a nozzle or the like.

13. Hot runner nozzle comprising an electrical heating installation (10; 30) according to any of claims 1 to 11, **characterised in that** the electric heating installation (10; 30) is attached to a cylindrical material tube (13) to form a fit having a predetermined clearance.

## Revendications

1. Dispositif de chauffage électrique (10 ; 30) pour systèmes à canaux chauds, en particulier pour buses à canaux chauds (12) et/ou distributeurs à canaux chauds, comprenant au moins un élément de support (20 ; 32) conformé en tube ou en douille et au moins une couche chauffante (22) présentant des voies thermo-conductrices (23), dans lequel la couche chauffante (22) est une feuille cuite ou une pâte cuite en couche épaisse, **caractérisé en ce qu'**entre l'élément de support (20 ; 32) et la couche chauffante (22) est aménagée une couche isolante (34) et **en ce que** l'élément de support (20 ; 32) est fabriqué en métal, en alliage métallique, en acier ou en alliage d'acier et peut être enfiché sur un tube de matériau (13) d'une buse à canaux chauds.

2. Dispositif de chauffage selon la revendication 1, **caractérisé en ce qu'**au moins une couche de revêtement (24) isolante de l'électricité est appliquée sur la couche chauffante (22).

3. Dispositif de chauffage selon la revendication 1 ou la revendication 2, **caractérisé en ce qu'**il est prévu au moins une autre couche (28) conductrice de l'électricité servant de sonde de température, dont la résistance électrique dépend de la température, dans lequel la couche (28) servant de sonde de température et la couche chauffante (22) se trouvent dans un plan dans la direction radiale.

4. Dispositif de chauffage selon l'une quelconque des revendications 1 à 3, **caractérisé en ce que** l'élément de support (20 ; 32) est fabriqué en matériau fritté, dans lequel le matériau fritté est un métal fritté ou un alliage métallique fritté.

5. Dispositif de chauffage selon la revendication 1, **caractérisé en ce qu'**une couche de compensation est aménagée entre l'élément de support (20 ; 32) et la couche isolante (34).

6. Dispositif de chauffage selon l'une quelconque des revendications 1 à 5, **caractérisé en ce que** la couche isolante (34) et/ou la couche de revêtement (24) et/ou la couche de compensation est ou sont une couche de diélectrique vitreux et/ou céramique, dans lequel la couche isolante (34) et/ou la couche de revêtement (24) et/ou la couche de compensation est ou sont sous précontrainte par rapport à l'élément de support (20 ; 32) après au moins un processus de cuisson, dans lequel le coefficient de dilatation thermique linéaire (TEC_{DE}) de la couche isolante (34) et/ou le coefficient de dilatation thermique linéaire (TEC_{DEA}) de la couche de revêtement (24) et/ou le coefficient de dilatation thermique linéaire (TEC_{DEA}) de la couche de compensation est ou sont plus petits que le coefficient de dilatation thermique linéaire (TEC_{M}) de l'élément de support (20 ; 32) après le processus de cuisson.

7. Dispositif de chauffage selon l'une quelconque des revendications précédentes, **caractérisé en ce que** la couche isolante (34) et/ou la couche de revêtement (24) et/ou la couche de compensation est ou sont une feuille cuite ou une pâte cuite en couche épaisse et/ou **en ce que** la couche isolante (34) et/ou la couche de revêtement (24) et/ou la couche de compensation est ou sont appliquées par revêtement par détonation ou par revêtement thermique ou par revêtement au trempé.

8. Dispositif de chauffage selon l'une quelconque des revendications précédentes, **caractérisé en ce que** la formation et/ou l'aménagement des voies thermo-conductrices (23) à l'intérieur de la couche chauffante (22) est ou sont adaptés au besoin de puissance thermique respectif, les voies thermo-conductrices (23) étant conformées en méandres au moins par sections.

9. Dispositif de chauffage selon la revendication 8, **caractérisé en ce que** les voies thermo-conductrices (23) en forme de méandres sont pourvues, sur et/ou dans leurs points d'inflexion, au moins par sections, d'une couche conductrice supplémentaire.

10. Dispositif de chauffage selon l'une quelconque des revendications précédentes, **caractérisé en ce qu'**il est agencé une couche de contact (26) entre la couche isolante (34), la couche chauffante (22) et/ou la couche (28) servant de sonde de température, respectivement.

11. Dispositif de chauffage selon l'une quelconque des revendications précédentes, **caractérisé en ce que** la couche isolante (34) et/ou la couche chauffante (22) et/ou la couche de revêtement (24) et/ou la couche de compensation et/ou la couche de contact (26) et/ou la couche (28) servant de sonde de température forment un stratifié.

12. Système à canaux chauds, en particulier buse à canaux chauds ou distributeur à canaux chauds comprenant un dispositif de chauffage électrique (10 ; 30) selon l'une quelconque des revendications 1 à 11, dans lequel ou laquelle le dispositif de chauffage électrique (10 ; 30) est monté sur un tube de matériau (13), une tige, un bras distributeur, une buse ou analogue.

13. Buse à canaux chauds pourvue d'un dispositif de chauffage électrique (10 ; 30) selon l'une quelconque des revendications 1 à 11, **caractérisée en ce que** le dispositif de chauffage électrique (10 ; 30) est monté sur un tube de matériau cylindrique (13) en formant un ajustement avec un jeu prédéterminé.
